(19) Europäisches Patentamt
European Patent Office
Office européen des brevets

(11) Numéro de publication: **0 281 718 B1**

(12) **FASCICULE DE BREVET EUROPEEN**

(45) Date de publication de fascicule du brevet: **23.09.92** (51) Int. Cl.[5]: **C08G 77/38**

(21) Numéro de dépôt: **87420217.9**

(22) Date de dépôt: **10.08.87**

(54) **Procédé de préparation d'un organopolysiloxane à fonction acrylate et/ou méthacrylate.**

(30) Priorité: **24.02.87 FR 8702617**

(43) Date de publication de la demande:
**14.09.88 Bulletin 88/37**

(45) Mention de la délivrance du brevet:
**23.09.92 Bulletin 92/39**

(84) Etats contractants désignés:
**AT BE CH DE ES FR GB GR IT LI LU NL SE**

(56) Documents cités:
**EP-A- 263 038** **EP-A- 0 097 333**
**EP-A- 0 159 729** **FR-A- 2 602 776**
**GB-A- 2 040 975** **US-A- 4 294 974**

(73) Titulaire: **RHONE-POULENC CHIMIE**
**25, quai Paul Doumer**
**F-92408 Courbevoie Cédex(FR)**

(72) Inventeur: **Canivenc, Edith**
**53, rue du Colombier**
**F-69007 Lyon(FR)**
Inventeur: **Gay, Michel**
**11, rue Garibaldi**
**F-69003 Lyon(FR)**

(74) Mandataire: **Fabre, Madeleine-France et al**
**RHONE-POULENC CHIMIE Direction des Brevets Secteur Spécialités Chimiques 25, quai Paul-Doumer**
**F-92408 Courbevoie Cédex(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 281 718 B1

## Description

La présente invention concerne un procédé de préparation d'un organopolysiloxane à fonction acrylate et/ou méthacrylate liée à la chaîne polysiloxane par une liaison SiC.

La demande en organopolysiloxane de ce type s'accroît fortement car il présente des vitesses de réticulation plus rapides que les organopolysiloxanes vinylés disponibles dans le commerce. Ces organopolysiloxanes à fonction acrylate et/ou méthacrylate se présentent généralement sous forme d'huiles diorganopolysiloxanes et peuvent être formulées seuls ou en combinaison avec des monomères ou des polymères insaturés, pour être par la suite réticulés en général sous rayonnement UV. Ainsi le brevet américain US-A-3 577 264 décrit des liants de peinture formant une pellicule et réticulables sous radiation contenant de telles huiles. Le brevet américain US-A-4 035 355 décrit la réticulation en milieu anaérobie de ces huiles. Le brevet européen EP-A-016 663 décrit leur utilisation comme revêtement anti-adhérent. Dans le brevet britannique GB-A-949 126 on décrit des silanes hydrolysables, utilisés comme promoteurs d'adhérence de matériaux renforçateurs en fibre de verre, certains de ces silanes étant préparés par hydrosilylation d'allylméthacrylate.

Cependant il est bien connu par la littérature que la réaction d'hydrosilylation de composés à substituant allyle, en présence d'un catalyseur au platine peut engendrer des réactions secondaires indésirables avec notamment apparition de propène à moins que l'hydrure de silicium contienne des groupements donneurs d'électrons tels que des groupements chlore ou carbonyle. On peut se rapporter à ce sujet à SPEIER, J.L. et al., J AM CHEM SOC. 79 51957 (1974) ET RYAM, I.W. ET al. J AM CHEM. SOC., 82 3601 (1980) ainsi qu'aux brevets américains US-A-4 503 208 et US-A-3 767 690.

Les brevets américains US-A-4 011 247 et US-A-4 554 339 décrivent des diorganopolysiloxanes portant à la fois des motifs acryloxy et des motifs SiH.

Selon le brevet US-A-4 554 339 on estérifie des huiles gamma-hydroxypropylées en bout de chaîne par de l'acide acrylique en utilisant une terre acide du type montmorillonite. Ce procédé présente l'inconvénient de devoir séparer le catalyseur solide en fin de réaction.

Dans les brevets américains US-A-4 261 875 et US-A-4 294 974 on décrit un procédé de préparation d'huiles diorganopolysiloxanes à fonctionnalité acrylate et/ou méthacrylate pouvant présenter en outre des fonctions hydroxyalkyle par réaction de l'huile diorganopolysiloxane correspondante à fonction hydroxyalkyle sur le chlorure d'acryloyle ou de méthacryloyle en présence de triéthylamine et formation du chlorhydrate de l'amine correspondant. Le principal inconvénient de cette méthode est précisément l'élimination du chlorhydrate d'amine formé.

Il est par ailleurs bien connu de façon générale, en dehors des silicones, en chimie organique :

- de préparer des esters des alcools supérieurs, dénommés esters lourds, par transestérification d'un ester d'un alcool inférieur, dénommé ester léger, avec ces alcools supérieurs,
- de favoriser la transéstérification par l'emploi d'un excès de l'ester léger et d'utiliser cet ester comme agent d'entraînement de l'acool inférieur produit au cours de la réaction,
- d'accélérer cette réaction par l'emploi d'un catalyseur, et
- éventuellement recycler la fraction ester léger-alcool léger à la propre fabrication de l'ester léger.

Cette réaction, appliquée aux acrylates et méthacrylates légers et aux alcools lourds, est connue en utilisant comme catalyseur un phénoxyde de titane (brevet français FR-A-2 033 441), de l'oxyde de zinc (brevet américain US-A-3 714 234) et de l'oxyde de dialkylétain (brevet d'Allemagne Démocratique DD-A-205 891).

Le but de la présente invention est de proposer un procédé industriel de préparation d'un organopolysiloxane, en particulier d'une huile diorganopolysiloxane à fonction acrylate et/ou méthacrylate liée à la chaîne polysiloxane par une liaison SiC, qui ne présente pas les inconvénients des procédés connus, à savoir l'apparition de quantités considérables de sous-produits, la nécessité de filtrer le catalyseur et/ou un sous-produit de la réaction, ainsi que l'apparition de réactions de polymérisation indésirées.

Ce but est atteint par la présente invention qui concerne en effet un procédé de préparation d'un organopolysiloxane, en particulier d'une huile diorganopolysiloxane à fonction acrylate et/ou méthacrylate, caractérisé en ce qu'on effectue au moins partiellement une transéstérification, en présence d'une quantité catalytiquement efficace d'un composé (A) à l'étain,
d'un organopolysiloxane (B) présentant au moins deux motifs siloxy par molécule, au moins un de ces motifs répondant à la formule :

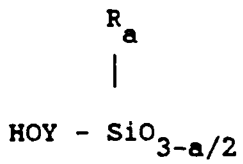

(1)

dans laquelle a est 1 ou 2, les symboles R, identiques ou différents, représentent un radical choisi parmi les radicaux alkyle en $C_1$-$C_{12}$ inclus, les radicaux phényle et trifluoro-3,3,3 propyle, au moins 80 % molaire des radicaux R étant des radicaux méthyle, les symboles Y, identiques ou différents, représentent un chaînon choisi parmi un chaînon alkylène linéaire ou ramifié en $C_1$-$C_{18}$ inclusivement,
sur un ester (C) de formule :

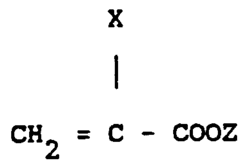

(2)

dans laquelle X est un atome d'hydrogène ou le radical méthyle et Z est un radical alkyle en $C_1$-$C_6$ inclusivement, de préférence un radical méthyle.

Au cours de la réaction de transéstérification on élimine, de préférence en continu, l'alcool formé de formule ZOH par distillation azéotropique avec l'ester (C).

Plus précisément l'organopolysiloxane (B) de départ est une huile diorganopolysiloxane répondant à la formule :

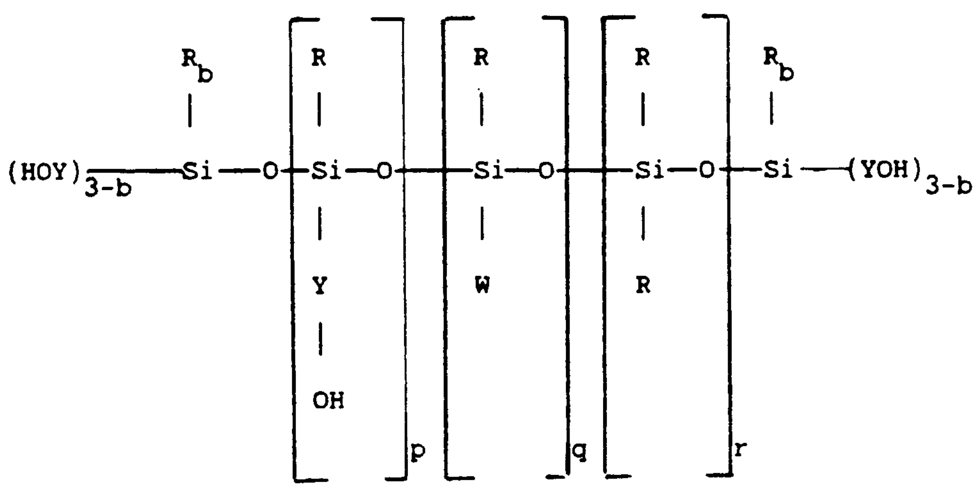

(3)

dans laquelle :

- b est 3 ou 2,
- p est un nombre entier compris entre 1 et 50 inclusivement, de préférence entre 1 et 16 avec p pouvant être égal à 0 quand b = 2,
- q est un nombre entier compris entre 0 et 30 inclusivement, de préférence entre 0 to 8 inclusivement,
- r est un nombre entier compris entre 0 et 500 inclusivement, de préférence entre 2 et 50,
- R et Y ont la même signification qu'à la formule (1) ci-dessus,
- W est un groupe fonctionnel inerte vis-à-vis de la réaction de transestérification.

Bien entendu, quand les copolymères de formule (1) se présentent sous forme de mélange présentant les mêmes motifs mais en nombre différent comme dans certains des exemples ci-dessous, ce mélange

peut être représenté par une formule (3) moyenne dans laquelle p, q et r peuvent être des nombres décimaux.

Comme exemples de radicaux R alkyle on peut citer le radical méthyle, éthyle, propyle et butyle.

Comme exemples de motifs diorganosiloxane $R_2$ SiO on peut citer :

$(CH_3)_2$ SiO
$(CH_2 = CH)(CH_3)$ SiO
$(C_6H_5)(CH_3)$ SiO
$(C_6H_5)_2$ SiO
$(CF_3 - CH_2 - CH_2)(CH_3)$ SiO

Comme exemples de chaînon Y, on peut citer :

$-CH_2-$, $-(CH_2)_2-$, $-(CH_2)_3-$, $-CH_2-CH(CH_3)-CH_2-$, $-(CH_2)_{12}-$,

Le chaînon $-(CH_2)_3-$ est le chaînon préféré.

Comme exemples de groupe W on peut citer les groupes dialkylaminoalkyle et glycidyloxyalkyle.

Les organopolysiloxanes (B) et ceux répondant à la formule (3) sont abondamment décrits dans la littérature.

Le catalyseur (A) peut être n'importe quel composé minéral et/ou organique de l'étain. On préfère toutefois utiliser les composés de l'étain de valence 4.

Sont plus particulièrement préférés les oxydes de dialkylétain dont les radicaux alkyle sont en $C_1$-$C_{18}$ inclusivement, tels que l'oxyde de di n-octylétain, l'oxyde de di(éthyl-2 hexyl)étain et les produits de réaction de ces oxydes de dialkylétain sur des esters organiques tels que le maléate de diméthyle et le phtalate de diéthyle ou des silicates d'alkyle tels que le silicate de méthyle ou d'éthyle comme décrits en détail dans les brevets américains US-A-2 597 920 et US-A-3 839 246 et le brevet britannique GB-A-1 551 868, à l'exclusion de l'oxyde de dibutylétain pris isolément.

Sont également utilisables tous les catalyseurs à l'étain utilisés comme catalyseurs de durcissement des compositions élastomères de silicones réticulant par réaction de polycondensation. Sont ainsi utilisables les carboxylates d'étain tels que les dicarboxylates de dialkylétain en particulier le dilaurate de di n-butylétain ou de di n-octylétain, le diacétate de di n-octylétain ou de di n-butylétain (voir ouvrage de NOLL "CHEMISTRY AND TECHNOLOGY OF SILICONES" page 337 Academic Press, 1968, 2ème édition) ainsi que les diversatates de dialkylétain (US-A-3 678 002).

Sont également utilisables les produits de réaction des dicarboxylates de dialkylétain sur les silicates ou leurs produits d'hydrolyse partielle comme décrit dans le brevet français FR-A-1 343 138 et les brevets américains US-A-3 186 963 et US-A-3 862 919, ainsi que les chelates d'étain décrits dans le brevet américain US-A-3 055 845 et le brevet européen EP-A-147 323.

Le catalyseur (A) peut être introduit en même temps que les réactifs (B) et (C) ou par petites portions ou cours de la réaction.

La quantité utilisée de catalyseur peut varier considérablement, elle est généralement de 0,001 à 2 %, de préférence 0,01 à 0,5 %, en poids d'étain métal par rapport au moids de la masse réactionnelle (B) + (C).

La quantité d'ester (C) est comprise, de préférence entre environ 1,1 et 5 moles de (C) par équivalent de fonctions alcool YOH contenues dans (B). On peut toutefois utiliser un défaut de (C) ou effectuer une transéstérification incomplète si l'on veut laisser des fonctions alcools libres.

Sur ces fonctions alcools libres on peut effectuer diverses réactions inertes vis-à-vis des groupements acrylate ou méthacrylate, on peut en particulier faire réagir du dicétène pour obtenir des groupements béta-cétoester :

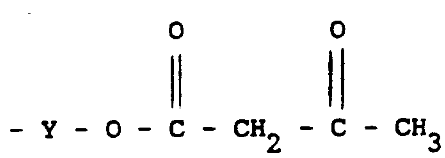

en présence d'un catalyseur acide tel que l'acide p-toluène sulfonique ou basique tel qu'une amine tertaire, en particulier la triméthylamine, la triéthylamine, etc .....

Cette réaction peut s'effectuer en masse ou, de préférence en milieu solvant organique tel que le xylène, le toluène.

La réaction d'un groupe hydroxyalkyle sur le dicétène est bien connue de l'homme de métier et est en particulier décrite par A.B. BOESE Industrial and Engineering Chemistry Int. Ed. 32 1940, pages 16 à 25 et par R.N. LACEY "Advances in organic Chemistry Methods and results", vol. 2, pages 240 à 248.

La réaction de transéstérification est conduite entre 50 et 160 °C, de préférence entre 80 et 120 °C, le plus souvent à la température de distillation azéotropique de l'ester (C) et de l'alcool libéré. Des pressions réduites peuvent être utilisées pour éviter des températures trop élevées dans le mélange réactionnel. Il est donc préfèrable d'utiliser un catalyseur (A) qui ne distille pas et qui soit stable dans les conditions réactionnelles pour qu'il puisse poursuivre son action catalytique.

La réaction est effectuée de préfèrence en masse mais elle peut être effectuée également au sein d'un solvant organique tel que le xylène et le toluène.

La réaction de transestérification à lieu de préférence, d'une part en présence de 0,1 à 1 % en poids par rapport au poids de la masse réactionnelle d'un antioxydant phénolique tel que par exemple l'hydroquinone et le résorcinol, et, d'autre part, sous atmosphère inerte, par exemple sous azote, de préférence par bullage dans le milieu réactionnel pour améliorer l'élimination de l'azéotrope alcool/produit (C) en continu.

L'huile fonctionnalisée obtenue peut être éventuellement décolorée par passage sur du charbon actif bien que cette opération ne soit généralement pas nécessaire.

Si par contre on met en oeuvre le procédé de l'invention en utilisant un catalyseur au titane tel que les tétraalcoxytitane, on obtient une huile colorée qu'il n'est pas possible de décolorer même par passage sur du charbon actif.

Les catalyseurs au zirconium ne sont pas également utilisables.

Ainsi l'emploi de tétraalcoxyzirconium entraîne une gélification du milieu réactionnel due probablement à des réactions de pontage des groupes hydroxyalkyle via le zirconium, soit

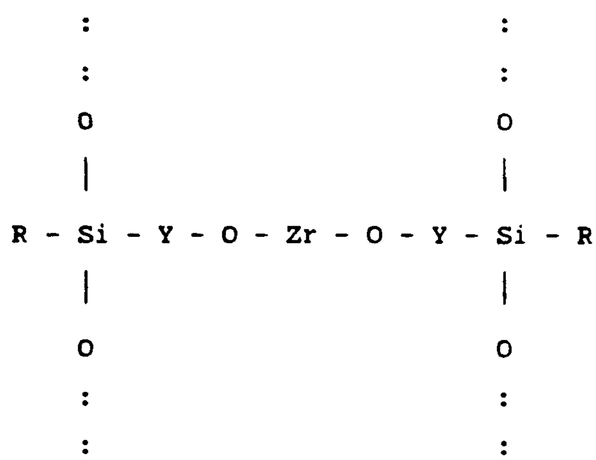

Les exemples suivants, non limitatifs, illustrent l'invention.

- Exemple 1 :

Dans un ballon tricol de 500 ml chauffé par un bain d'huile à 100 °C et muni d'une agitation centrale, d'un réfrigérant ascendant et balayé par un courant d'azote par bullage dans le milieu réactionnel, on charge 40 g d'huile gamma-hydroxypropylée de formule moyenne :

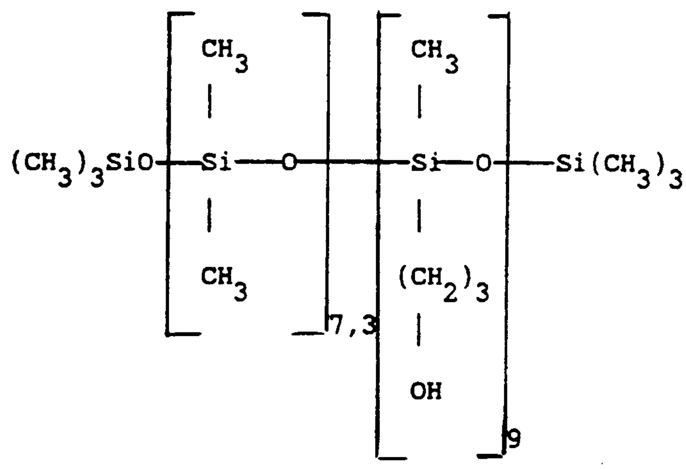

titrant 485 meq/100 g en fonction alcool (meq = milliéquivalent) et 68 g de méthacrylate de méthyle (MAM), soit un rapport molaire MAM/fonction OH de 3,5.

On utilise comme catalyseur à l'étain le produit de réaction, pendant 1 h 30 minutes à 140 °C de 2 moles d'oxyde de dibutylétain sur 1 mole de myristate de méthyle en suivant l'enseignement du brevet américain US-A-2 597 920.

On obtient une huile jaune pâle titrant 32 % en poids d'étain.

On charge 1,68 g de ce produit de réaction, ce qui représente environ 0,5 % en poids d'étain par rapport à la masse réactionelle, ainsi que 0,27 g soit 0,25 % en poids par rapport à la masse réactionnelle d'hydroquinone.

On effectue la réaction sous agitation pendant 20 heures. En fin de réaction on élimine le MAM en excès par distillation pendant 1 heure à 70 °C sous 0,4 KPa.

On obtient une huile limpide pratiquement incolore et stable au stockage de formule moyenne en accord avec le spectre RMN :

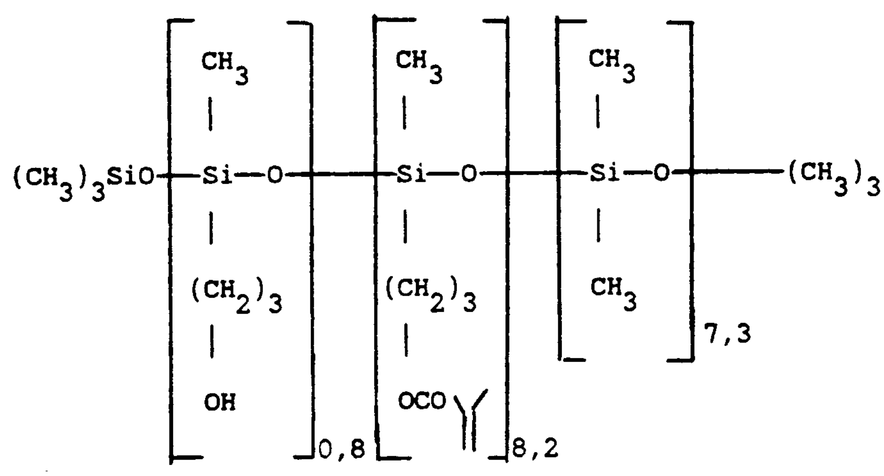

- <u>EXEMPLE 2</u> :

On effectue exactement les mêmes opérations qu'à l'exemple 1, sauf que l'on utilise 5,4 g de dilaurate de di n-butylétain, soit 0,95 % d'étain métal par rapport à la masse réactionnelle et 0,52 g d'hydroquinone.

On obtient une huile limpide dont 58 % en mole des groupements gamma-hydroxyalkyle sont transéstérifiés.

- <u>EXEMPLE COMPARATIF 3</u> :

On répète exactement le mode opératoire de l'exemple 1, sauf qu'on remplace le catalyseur à l'étain par 0,5 g de tétrabutoxytitane, ce qui correspond à l'introduction d'un nombre de moles en titane sensiblement équivalent au nombre de moles d'étain.

On obtient une huile noirâtre très fortement colorée qui ne peut être décolorée au noir de carbone et qui est par conséquent inutilisable.

- EXEMPLE COMPARATIF 4 :

On répète le mode opératoire de l'exemple 1, sauf que le catalyseur utilisé est 1,48 g de tétrapropylzirconate, soit un nombre de moles en zirconium sensiblement équivalent au nombre de moles d'étain. Le milieu réactionnel gélifie au cours de l'élimination du MAM. Un temps de réaction de 15 heures au lieu de 20 heures entraîne le même phénomène.

**Revendications**

1. Procédé de préparation d'un organopolysiloxane à fonction acrylate et/ou méthacrylate, caractérisé en ce qu'on effectue au moins partiellement une transestérification, en présence d'une quantité catalytiquement efficace d'un composé (A) à l'étain qui consiste dans n'importe quel composé minéral et/ou organique de l'étain à l'exclusion de l'oxyde de dibutylétain pris isolément, d'un organopolysiloxane (B) présentant au moins deux motifs siloxy par molécule, au moins un des ces motifs répondant à la formule :

$$HOY - \overset{\overset{\displaystyle R_a}{|}}{Si}O_{3-a/2} \qquad (1)$$

dans laquelle a est 1 ou 2, les symboles R, identiques ou différents, représentent un radical choisi parmi les radicaux alkyle et $C_1$-$C_{12}$ inclus, les radicaux phényle et trifluoro-3,3,3' propyle, au moins 80 % molaire des radicaux R étant des radicaux méthyle, les symboles Y, identiques ou différents, représentent un chaînon choisi parmi un chaînon alkylène linéaire ou ramifié en $C_1$-$C_{18}$ inclusivement, sur un ester (C) de formule :

$$CH_2 = \overset{\overset{\displaystyle X}{|}}{C} -COOZ \qquad (2)$$

dans laquelle X est un atome d'hydrogène ou le radical méthyle et Z est un radical alkyle en $C_1$-$C_6$ inclusivement.

2. Procédé selon la revendication 1, caractérisé en ce que l'organopolysiloxane (B) de départ est une huile diorganopolysiloxane répondant à la formule :

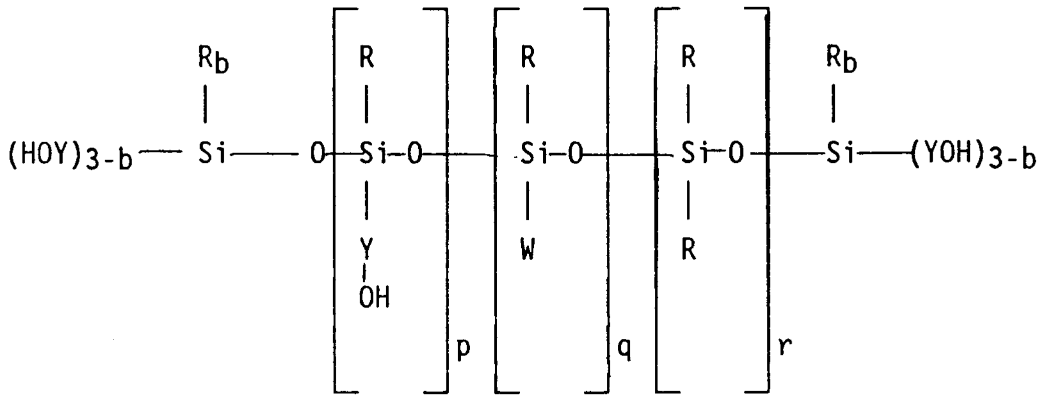 (3)

dans laquelle :

- b est 3 ou 2,
- p est un nombre entier compris entre 1 et 50 inclusivement, de préférence entre 1 et 16 avec p pouvant être égal à 0 quand b = 2,
- q est égal à 0 ou est un nombre entier allant jusqu'à 30 inclusivement, de préférence 8 inclusivement,
- r est égal à 0 ou est un nombre entier allant jusqu'à 500 inclusivement, de préférence compris entre 2 et 50,
- R et Y ont la même signification qu'à la formule (1) ci-dessus,
- W est un groupe fonctionnel inerte vis-à-vis de la réaction de transestérification.

**3.** Procédé selon la revendication 1 ou 2, caractérisé en ce que, en fin de réaction de transestérification, on élimine l'alcool formé de formule ZOH par distillation azéotropique avec l'ester (C).

**4.** Procédé selon l'une quelconque des revendications précédentes, caractérisés en ce que l'ester (C) est choisi parmi l'acrylate de méthyle et le méthacrylate de méthyle.

**5.** Procédé selon l'une quelconque des revendications précédentes, caractérisé en ce que le catalyseur (A) est un composé minéral et/ou organique de l'étain de valence 4, à l'exclusion de l'oxyde de dibutylétain pris isolément.

**6.** Procédé selon la revendication 5, caractérisé en ce que le catalyseur (A) est choisi parmi les oxydes de dialkylétain à l'exclusion de l'oxyde de dibutylétain, les carboxylates d'étain, les dicarboxylates de dialkylétain et les chelates d'étain.

**7.** Procédé selon la revendication 5, caractérisé en ce que le catalyseur (A) est choisi parmi le produit de réaction d'oxydes de dialkylétain, y compris l'oxyde de dibutylétain, sur des esters organiques ou des silicates d'alkyle.

**8.** Procédé selon l'une quelconque des revendications précédentes, caractérisé en ce qu'on utilise de 0,001 à 2 %, de préférence de 0,01 à 5 % en poids d'étain métal par rapport au poids de la masse réactionnelle (B) + (C).

**9.** Procédé selon l'une quelconque des revendications 1 à 8, caractérisé en ce que la quantité d'ester (C) est comprise entre environ 1,1 et 5 moles par équivalent de fonctions alcool YOH contenues dans (B).

**10.** Procédé selon l'une quelconque des revendications 1 à 9, selon lequel on effectue une transestérification incomplète et en ce qu'on fait réagir en outre sur les fonctions alcool YOH restées libres du dicétène pour obtenir des groupements béta-cétoester :

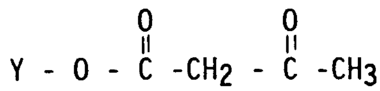

en présence d'un catalyseur acide ou basique.

## Claims

1. Process for the preparation of an organopolysiloxane containing an acrylate and/or methacrylate functional group, characterised in that at least a partial transesterification is carried out, in the presence of a catalytically effective amount of a tin-containing compound (A) which consists of any inorganic and/or organic tin compound, excluding dibutyltin oxide taken on its own, of an organopolysiloxane (B) containing at least two siloxy units per molecule, at least one of these units corresponding to the formula:

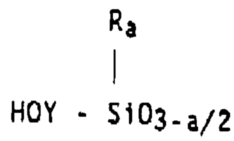

(1)

in which a is 1 or 2, the symbols R, which may be identical or different, represent a radical chosen from $C_1$-$C_{12}$ (inclusive) alkyl radicals, phenyl and 3,3,3'-trifluoropropyl radicals, at least 80 mol % of the radicals R being methyl radicals, the symbols Y, which may be identical or different, represent a chain unit chosen from a $C_1$-$C_{18}$ (inclusive) straight-chain or branched alkylene chain unit,
with an ester (C) of formula:

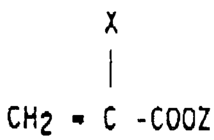

(2)

in which X is a hydrogen atom or a methyl radical and Z is a $C_1$-$C_6$ (inclusive) alkyl radical.

2. Process according to claim 1, characterised in that the starting organopolysiloxane (B) is a diorganopolysiloxane oil corresponding to the formula:

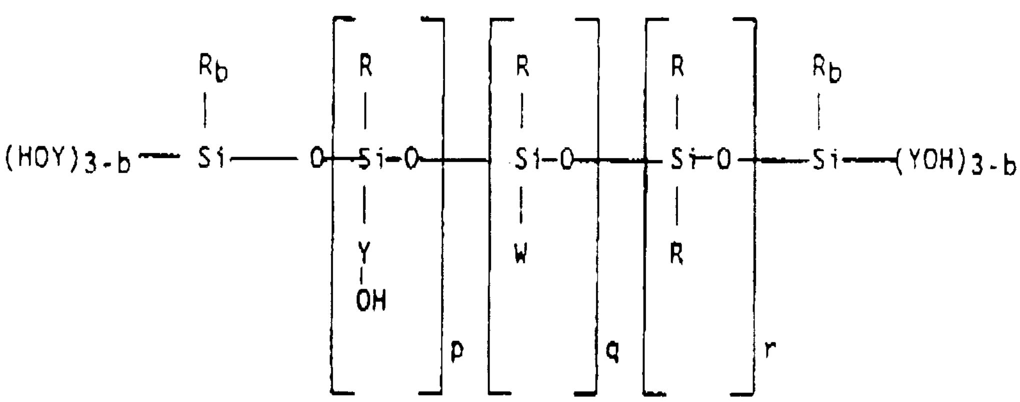

(3)

in which:
- b is 3 or 2,

- p is an integer between 1 and 50 inclusive, preferably between 1 and 16, it being possible for p to be equal to 0 when b = 2,
- q is equal to 0 or is an integer up to and including 30, preferably up to and including 8,
- r is equal to 0 or is an integer up to and including 500, preferably between 2 and 50,
- R and Y have the same meaning as in formula (1) above, and
- W is a functional group which is inert towards the transesterification reaction.

**3.** Process according to claim 1 or 2, characterised in that, when the transesterification reaction is complete, the alcohol formed of formula ZOH is removed by azeotropic distillation with the ester (C).

**4.** Process according to any one of the preceding claims, characterised in that the ester (C) is chosen from methyl acrylate and methyl methacrylate.

**5.** Process according to any one of the preceding claims, characterised in that the catalyst (A) is an inorganic and/or organic compound of tin of valency 4, excluding dibutyltin oxide taken on its own.

**6.** Process according to claim 5, characterised in that the catalyst (A) is chosen from dialkyltin oxides excluding dibutyltin oxide, tin carboxylates, dialkyltin dicarboxylates and tin chelates.

**7.** Process according to claim 5, characterised in that the catalyst (A) is chosen from the reaction product of dialkyltin oxides, including dibutyltin oxide, with organic esters or alkyl silicates.

**8.** Process according to any one of the preceding claims, characterised in that 0.001 to 2%, preferably 0.01 to 0.5% by weight of tin metal is used relative to the weight of the reaction mixture (B) + (C).

**9.** Process according to any one of claims 1 to 8, characterised in that the quantity of ester (C) is between approximately 1.1 and 5 moles per equivalent of alcohol functional groups YOH contained in (B).

**10.** Process according to any one of claims 1 to 9, according to which an incomplete transesterification is carried out and characterized in that the remaining free alcohol groups YOH are additionally reacted with diketene to obtain beta-ketoester groups:

$$Y - O - \overset{\overset{O}{\|}}{C} - CH_2 - \overset{\overset{O}{\|}}{C} - CH_3$$

in the presence of an acidic or basic catalyst.

**Patentansprüche**

**1.** Verfahren zur Herstellung eines Organopolysiloxans mit Acrylat- und/oder Methacrylatfunktion, dadurch gekennzeichnet, daß man zumindest teilweise eine Umesterung in Gegenwart einer katalytisch wirksamen Menge einer Zinnverbindung (A), die aus einer beliebigen anorganischen und/oder organischen Zinnverbindung mit Ausnahme von Dibutylzinnoxid bei alleiniger Verwendung besteht, eines Organopolysiloxans (B) mit zumindest zwei Siloxygruppen je Molekül, wobei zumindest eine dieser Gruppen der Formel

$$HOY - \overset{R_a}{\overset{|}{Si}}O_{3-a/2} \qquad (1)$$

entspricht, worin a für 1 oder 2 steht, die Symbole R, die gleich oder voneinander verschieden sind, einen Rest, ausgewählt unter den Alkylresten mit $C_1$ bis $C_{12}$ einschließlich, den Phenyl- und 3,3,3'-Trifluorpropylresten, bedeuten, wobei zumindest 80 Mol-% der Reste R Methylreste sind, die Symbole Y, die gleich oder voneinander verschieden sind, eine Kette, ausgewählt unter einer linearen oder

verzweigten Alkylenkette mit $C_1$ bis $C_{18}$ einschließlich darstellen, mit einem Ester (C) der Formel

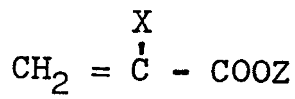
(2)

worin X für ein Wasserstoffatom oder den Methylrest steht und Z einen Alkylrest mit $C_1$ bis $C_6$ einschließlich bedeutet, durchführt.

**2.** Verfahren gemäß Anspruch 1, dadurch gekennzeichnet, daß das Ausgangs-Organopolysiloxan (B) ein Diorganopolysiloxanöl der Formel

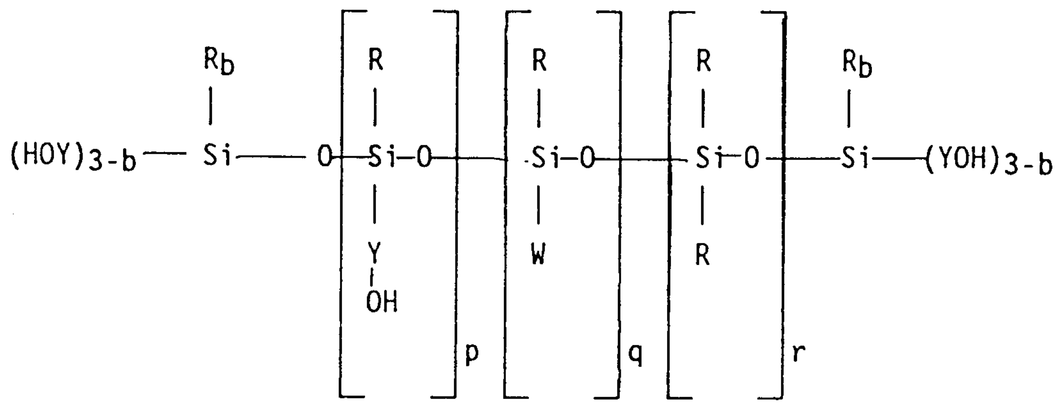
(3)

ist, worin
b für 3 oder 2 steht,
p eine ganze Zahl zwischen 1 und 50 einschließlich, vorzugsweise zwischen 1 und 16, ist, wobei p 0 sein kann, wenn b = 2,
q für 0 steht oder eine ganze Zahl bis zu 30 einschließlich, vorzugsweise 8 einschließlich, ist,
r für 0 steht oder eine ganze Zahl bis zu 500 einschließlich, vorzugsweise zwischen 2 und 50, ist,
R und Y die für die vorstehende Formel (1) angegebene Bedeutung besitzen,
W eine gegenüber der Umesterungsreaktion inerte funktionelle Gruppe ist.

**3.** Verfahren gemäß Anspruch 1 oder 2, dadurch gekennzeichnet, daß man am Ende der Umesterungsreaktion den gebildeten Alkohol der Formel ZOH durch azeotrope Destillation mit dem Ester (C) entfernt.

**4.** Verfahren gemäß einem der vorhergehenden Ansprüche, dadurch gekennzeichnet, daß der Ester (C) unter Methylacrylat und Methylmethacrylat ausgewählt wird.

**5.** Verfahren gemäß einem der vorhergehenden Ansprüche, dadurch gekennzeichnet, daß der Katalysator (A) eine anorganische und/oder organische Zinnverbindung der Wertigkeit 4 unter Ausschluß von Dibutylzinnoxid bei alleiniger Verwendung ist.

**6.** Verfahren gemäß Anspruch 5, dadurch gekennzeichnet, daß der Katalysator (A) unter den Dialkylzinnoxiden unter Ausschluß von Dibutylzinnoxid, den Zinncarboxylaten, den Dialkylzinndicarboxylaten und den Zinnchelaten ausgewählt wird.

**7.** Verfahren gemäß Anspruch 5, dadurch gekennzeichnet, daß der Katalysator (A) unter dem Reaktionsprodukt der Dialkylzinnoxide, hierunter Dibutylzinnoxid, mit den organischen Estern oder Alkylsilikaten ausgewählt wird.

**8.** Verfahren gemäß einem der vorhergehenden Ansprüche, dadurch gekennzeichnet, daß man 0,001 bis 2 Gew.%, vorzugsweise 0,01 bis 0,5 Gew.%, metallisches Zinn, bezogen auf das Gewicht der Reaktionsmasse (B) + (C),verwendet.

**9.** Verfahren gemäß einem der Ansprüche 1 bis 8, dadurch gekennzeichnet, daß die Menge des Esters (C) zwischen etwa 1,1 und 5 Mol je Äquivalent der in (B) enthaltenen Alkoholfunktionen YOH beträgt.

**10.** Verfahren gemäß einem der Ansprüche 1 bis 9, demgemäß man eine unvollständige Umesterung durchführt und dadurch gekennzeichnet, daß man außerdem in Gegenwart eines sauren oder basischen Katalysators Diketen mit den verbliebenen freien Alkoholfunktionen YOH umsetzt, um $\beta$-Ketoestergruppen

$$Y - O - \overset{O}{\overset{\|}{C}} - CH_2 - \overset{O}{\overset{\|}{C}} - CH_3$$

zu erhalten.